# EUROPEAN PATENT SPECIFICATION

(11) **EP 3 959 707 B1**
(45) Date of publication and mention of the grant of the patent: **11.12.2024**
(21) Application number: 20794362.2
(22) Date of filing: 24.04.2020
(51) Int. Cl.: G09B 23/30, G09B 23/32, G01N 15/00

(54) **METHODS AND SYSTEMS FOR SIMULATING DEPOSITION OF INHALED DRUG ON LUNGS**
VERFAHREN UND SYSTEME ZUR SIMULATION DER ABLAGERUNG VON INHALIERTEN ARZNEIMITTELN AUF DER LUNGE
PROCÉDÉS ET SYSTÈMES DE SIMULATION DE DÉPÔT DE MÉDICAMENT INHALÉ SUR LES POUMONS

(30) Priority: 24.04.2019 IN 201921016322
(43) Date of publication of application: 02.03.2022
(73) Proprietor: Cipla Limited, Mumbai 400 013 (IN)
(72) Inventor: KULKARNI, Nandan, Mumbai 400080 (IN); MALHOTRA, Geena, Mumbai 400014 (IN)
(74) Representative: Turner, Craig Robert
(86) International application number: PCT/IN2020/050381
(87) International publication number: WO 2020/217259

(56) References cited:
- WO-A1-2016/118935
- WO-A1-2019/109192
- CA-C- 2 146 954
- CZ-B6- 302 640
- JP-A- 2017 158 809
- US-A1- 2004 110 117
- US-A1- 2011 045 450
- US-A1- 2012 247 235
- US-A1- 2016 217 709
- US-A1- 2020 160 752

## Description

### FIELD OF THE INVENTION

The present disclosure generally relates to pharmacokinetics and more particularly, relates to simulating deposition of inhaled drug on lungs of an individual.

### BACKGROUND OF THE INVENTION

As is generally known, administration of drugs by inhalation has been a widely popular treatment process for respiratory disorders, such as asthma and chronic obstructive pulmonary diseases. For example, antibiotics and other drugs have been administered as aerosols to treat pulmonary diseases in clinical set-ups. However, factors, such as aerosol delivery and lung deposition have proven to be major barriers in achieving a desired pharmacodynamics effect of the inhaled drugs. In fact, it has been found that the site of deposition in the lungs is influenced by physiology of an individual's lungs and aerosol properties, for example, particle size distribution.

Accordingly, continuous efforts are being made to improve delivery techniques and individual's breathing techniques in order to maximize an amount of the inhaled drug that actually is delivered to the lungs of the individual. Particularly, in the last few decades, significant growth and development has been witnessed in pharmacokinetic processes through in-silicosimulation. The in-silicosimulation techniques aim to assess, qualitatively as well as quantitatively, the pharmacokinetic processes to predict in-vivo performance of a drug, for example, in terms of deposition of the inhaled drugs on the lungs. However, in order to accurately predict clinical outcomes of inhalation of the drugs, it is relevant to achieve realistic in-vitro conditions, for example, simulating an accurate respiratory flow rate based on different individuals, such as children, healthy adults, and diseased adults.

Despite extensive use of the in-silico and in-vitro techniques in the current times, there are various shortcomings in predicting deposition of the inhaled drugs on the lungs. Accordingly, it is a challenge to predict quantity and pharmacodynamics effect of every dosage of any drug that is meant to be inhaled by individuals. This of course directly affects the development and evolution of the drugs as well.

WO2016/118935A1 describes an apparatus that simulates a respiratory system for characterizing particle delivery within lungs by an inhaler within lungs. Said respiratory system simulator comprises a simulated oral cavity to receive an aerosol, a simulated oropharynx cavity, a simulated lung airway system and a breath simulator.

### SUMMARY OF THE INVENTION

This summary is provided to introduce a selection of concepts in a simplified format that are further described in the detailed description of the present disclosure. This summary is not intended to identify key or essential inventive concepts of the present disclosure, nor is it intended for determining the scope of the present disclosure.

The present invention relates to an apparatus for simulating deposition of an inhaled drug on the lungs of an individual as defined in independent claim 1 and to a method for simulating deposition of an inhaled drug on lungs of an individual as defined in independent claim 14.

In an embodiment of the present disclosure, an apparatus for simulating deposition of an inhaled drug on lungs of an individual is disclosed. The apparatus includes a mouth-throat model, an inhalation device connected to the mouth-throat model and adapted to disperse a drug in the mouth-throat model, and a breath simulator connected to the mouth-throat model and adapted to disperse a respiration flow in the mouth-throat model. The respiration flow is generated based on a respiration profile of the individual. Further, said apparatus includes a controlling unit in communication with the breath simulator and the inhalation device and adapted to detect the dispersion of the respiration flow into the mouth-throat model and actuate the inhalation device to disperse the drug in the mouth-throat mode, based on the detection. Furthermore, the apparatus includes a mixing inlet formed downstream to the mouth-throat model and the breath simulator, such that the respiration flow and the drug are uniformly mixed while passing through the mixing inlet. The apparatus also includes a lung cast model formed downstream to the mixing inlet and adapted to receive the mixture to accommodate deposition of the drug.

In another embodiment of the present disclosure, a system for simulating deposition of an inhaled drug on lungs of an individual is disclosed. The system includes a sensing unit 120 in communication with an inhalation device to detect at least one respiration parameter of the individual, wherein the at least one respiration parameter is detected when the individual inhales through the inhalation device. Further, the system includes a breath simulator in communication with the sensing unit 120 and adapted to disperse a respiration flow in the mouth-throat model, wherein the respiration flow is generated based on the at least one respiration parameter of the individual. The system also includes a controlling unit in communication with the breath simulator and the inhalation device, and adapted to detect the dispersion of the respiration flow by the breath simulator and actuate the inhalation device to disperse the drug in the mouth-throat model, based on the detection. The respiration flow and the drug are forwarded towards a lung cast model for deposition of the drug.

In yet another embodiment of the present disclosure, a method for simulating deposition of an inhaled drug on lungs of an individual is disclosed. The method includes steps of detecting at least one respiration parameter of the individual, wherein the at least one respiration parameter is detected when the individual inhales through an inhalation device. Further, the detecting step is followed by dispersing a respiration flow in a mouth-throat model, wherein the respiration flow is generated based on the at least one respiration parameter of the individual. Furthermore, the method includes detecting the dispersion of the respiration flow by the breath simulator and actuating the inhalation device to disperse the drug in the mouth-throat mode based on the detection, wherein the respiration flow and the drug are forwarded towards a lung cast model for deposition of the drug.

### BRIEF DESCRIPTION OF DRAWINGS

To further clarify advantages and features of the present disclosure, a more particular description of the disclosure will be rendered by reference to specific embodiments thereof, which is illustrated in the appended drawing. It is appreciated that these drawings depict only typical embodiments of the disclosure and are therefore not to be considered limiting its scope. The disclosure will be described and explained with additional specificity and detail with the accompanying drawings in which:
**Figure 1** illustrates a schematic view of an apparatus for simulating deposition of an inhaled drug on lungs of an individual, in accordance with an embodiment of the present disclosure;
**Figure 2** illustrates a block diagram depicting various components of the apparatus, in accordance with another embodiment of the present disclosure;
**Figure 3** illustrates a block diagram of a system of the apparatus for simulating deposition of the inhaled drug, in accordance with another embodiment of the present disclosure;
**Figure 4A** illustrates the apparatus, according to an embodiment of the present disclosure;
**Figure 4B** illustrates a prototype lung cast model, according to an embodiment of the present disclosure; and
**Figure 5** illustrates a flow diagram depicting a method for simulating deposition of the inhaled drug on the lungs, in accordance with an embodiment of the present disclosure.

Further, skilled artisans will appreciate that elements in the drawings are illustrated for simplicity and may not have necessarily been drawn to scale. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having benefit of the description herein.

### DETAILED DESCRIPTION OF DRAWINGS

For the purpose of promoting an understanding of the principles of the invention, reference will now be made to the embodiment illustrated in the drawings, and specific language will be used to describe the same. It will nevertheless be understood that no limitation of the scope of the invention is thereby intended. Such alterations and further modifications in the illustrated system, and such further applications of the principles of the invention as illustrated therein would be contemplated as would normally occur to one skilled in the art to which the invention relates. Unless otherwise defined, all technical and scientific terms used herein have the same meaning as commonly understood by one of ordinary skilled in the art. The system, methods, and examples provided herein are illustrative only and are not intended to be limiting.

The term "some" as used herein is to be understood as "none or one or more than one or all." Accordingly, the terms "none," "one," "more than one," "more than one, but not all" or "all" would all fall under the definition of "some." The term "some embodiments" may refer to no embodiments or to one embodiment or to several embodiments or to all embodiments, without departing from the scope of the present disclosure.

The terminology and structure employed herein is for describing, teaching, and illuminating some embodiments and their specific features. It does not in any way limit, restrict or reduce the scope of the claims.

More specifically, any terms used herein such as but not limited to "includes," "comprises," "has," "consists," and grammatical variants thereof do not specify an exact limitation or restriction and certainly do not exclude the possible addition of one or more features or elements, unless otherwise stated, and furthermore must not be taken to exclude the possible removal of one or more of the listed features and elements, unless otherwise stated with the limiting language "must comprise" or "needs to include."

Whether or not a certain feature or element was limited to being used only once, either way, it may still be referred to as "one or more features" or "one or more elements" or "at least one feature" or "at least one element." Furthermore, the use of the terms "one or more" or "at least one" feature or element do not preclude there being none of that feature or element, unless otherwise specified by limiting language such as "there needs to be one or more ... " or "one or more element is required."

Unless otherwise defined, all terms, and especially any technical and/or scientific terms, used herein may be taken to have the same meaning as commonly understood by one having ordinary skills in the art.

Any particular and all details set forth herein are used in the context of some embodiments and therefore should not be necessarily taken as limiting factors to the attached claims. The attached claims and their legal equivalents can be realized in the context of embodiments other than the ones used as illustrative examples in the description below.

Embodiments of the present invention will be described below in detail with reference to the accompanying drawings.

The present disclosure provides an individual-specific apparatus, system and method for deposition of an inhaled drug on lungs of an individual. The present disclosure takes physiological parameters and respiration profiles of individuals into consideration. By doing so, the individual-specific apparatus is capable of differentiating between effects of the inhaled drug in different individuals, for example, in a healthy individual and in a diseased individual. Further, the present disclosure also facilitates effective and controlled deposition of the drug on the lungs, thereby enhancing the efficiency of the drug being administered.

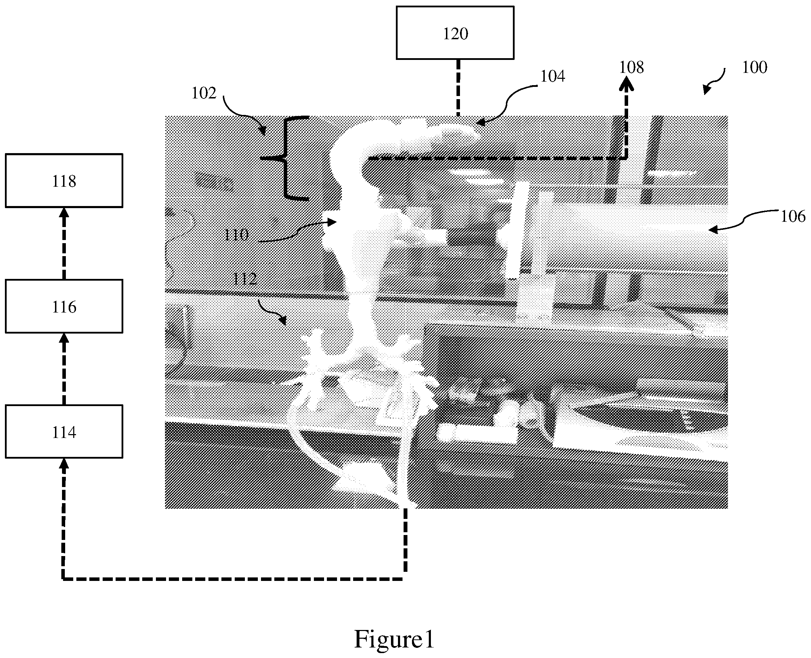

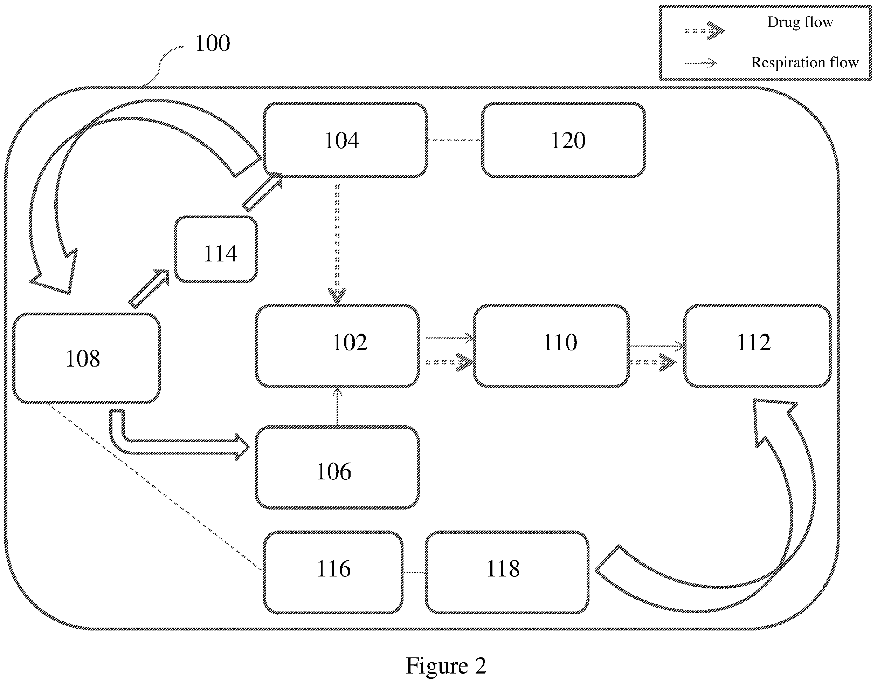

**Figure** 1 illustrates a schematic view of an apparatus for simulating deposition of an inhaled drug on lungs of an individual, in accordance with an embodiment of the present disclosure. Further, **Figure 2** illustrates a block diagram depicting various components of the apparatus 100, in accordance with another embodiment of the present disclosure. Figure 2 also indicates the flow of fluid through the apparatus 100. In order to avoid duplicity of information, the description of Figure 1 and Figure 2 are explained in conjunction with each other.

Referring to Figure 1 and Figure 2, the apparatus 100 may include, but is not limited to, a mouth-throat model 102, an inhalation device 104 connected to the mouth-throat model 102, a breath simulator 106 connected to the mouth-throat model 102, a controlling unit 108 in communication with the breath simulator 106 and the inhalation device 104, a mixing unit 110 formed downstream to the mouth-throat model 102 and the breath simulator 106, and a lung cast model 112 formed downstream to the mixing unit 110.

In an embodiment, the mouth-throat model 102 may be indicative of mouth and throat for realistic and bio-relevant oral inhalation product testing of an individual. The mouth-throat model 102 may include oral cavity, pharynx, larynx, and a portion of the upper trachea. The mouth-throat model 102 may differ in the type of formulation, geometry, shape, and internal space volume, for example, based on one or more constituent factors. Such factors may include, but are not limited to, an age of the individual, a health state, and a gender. The mouth-throat model 102 is connected to the inhalation device 104.

Further, the inhalation device 104 may be adapted to disperse the drug in the mouth-throat model 102. Therefore, the drug is administered through the inhalation device 104 to be dispersed in the mouth-throat model 102. Since the inhalation device 104 enables delivery of the inhaled drug directly to the lungs of the individual, a smaller amount of drug is required for the effective treatment in comparison to administering through any other way. Further, the time taken in administration of the drug is also less through the present technique. In an embodiment, the inhalation device 104 may be one of a metered inhaler, a dry powder inhaler, and a soft mist inhaler. In another embodiment, the inhalation device 104 may be any other available inhaler used for administering drugs and delivering directly to the lungs of the individual.

Further, the mouth-throat model 102 may also be coupled with the breath simulator 106. The breath simulator 106 may be adapted to disperse a respiration flow in the mouth-threat model 102. In an embodiment, the respiration flow is generated based on a respiration profile of the individual. In an embodiment, the respiration flow may be indicative of a volumetric flow rate of the air being drawn into the mouth-throat model 102. As would be appreciated by a person skilled in the art, the respiration flow may differ from an individual to another, for example, based on differences in the respiration parameters and consequently the respiration profile.

In an embodiment, the apparatus 100 may include a sensing unit 120 in communication with the inhalation device 104. The sensing unit 120 may detect at least one respiration parameter of the individual. In an embodiment, the sensing unit 120 may detect the at least one respiration parameter, when the individual inhales through the inhalation device 104. In an embodiment, the respiration parameter may include, but is not limited to, a respiration flow rate, a total lung capacity, an effect of temperature, a humidity gradient, and mucosal layer in lung on respiration. In an embodiment, the sensing unit 120 may be in communication with the controlling unit 108.

Based on the respiration parameter, the controlling unit 108 may be adapted to generate the respiration profile of the individual. In an embodiment, the respiration profile may be indicative of a respiration rate of the individual. Further, the controlling unit 108 may transmit the generated respiration profile to the breath simulator 106 for generation and dispersion of the respiration flow in the mouth-throat model 102.

In an embodiment, the controlling unit 108 may be adapted to detect the dispersion of the respiration flow into the mouth-throat model 102. In an embodiment, the controlling unit 108 may include one or more sensors to detect the dispersion of the respiration flow into the mouth-throat model 102. Based on the detection, the controlling unit 108 may actuate the inhalation device 104 to disperse the drug into the mouth-throat model 102.In an embodiment, the controlling unit 108 may transmit a signal in response to the detection of respiration flow to actuate the inhalation device 104 in order to simultaneously disperse the inhaled drug into the mouth-throat model 102. On being actuated, the inhalation device 104 disperses the drug into the mouth-throat model 102 where the required flow of respiration has already been received by the breath simulator 106.

It is relevant to ensure that the respiration flow and the drug are adequately mixed before being introduced to the lung cast model 112. Therefore, the mixing unit 110 is formed downstream to the mouth-throat model 102 and the breath simulator 106 such that the respiration flow and the drug are uniformly mixed while passing through the mixing unit 110. In an embodiment, the mixing unit 110 may have a mixing inlet and a mixing outlet. The dispersed drug and the respiration flow are transmitted from the mouth-throat model 102 to the mixing unit 110 through the mixing inlet. The mixing unit 110 may have a profile that provides for uniform mixing of the respiration flow with the dispersed drug, and therefore, the mixture leaving the mixing unit 110 at the mixing outlet is a uniform mixture of the respiration flow and the inhaled drug.

The lung cast model 112 may be adapted to receive the uniform mixture of the respiration flow and the inhaled drug for accommodating the deposition of the drug. The lung cast model 112 is therefore formed such that a deposition pattern is similar to an actual lung deposition of the drug on the lungs of an individual.

In an embodiment, the lung cast model 112 may be formed based on at least one physiological parameter and the respiration profile of the individual. Therefore, the lung cast model 112 may be made individual-specific. In such an embodiment, the physiological parameters affecting the lung-cast model 112 may include, but are not limited to a breathing frequency of the individual, a tidal volume or the volume of air exhaled in one inspiration or expiration, ventilation or the volume of air inhaled or exhaled from the individual's lungs, a vital capacity or the maximum amount of air the individual can expel from the lungs after a maximum inspiration, an oxygen uptake, carbon dioxide production, and respiratory exchange equivalent for oxygen. In another embodiment, the physiological parameters of the individual may be determined by High Resolution Computed Tomography (HRCT), and scan of lungs of the individual.

In an embodiment, the apparatus 100 may further include a flow regulator 114 in communication with the inhalation device 104 and the controlling unit 108. The flow regulator 114 is adapted to regulate a flow rate of the inhaled drug dispersed in the mouth-throat model 102. In an embodiment, the controlling unit 108 may detect the flow of the drug from the inhalation device 104 and accordingly transmit a signal to the flow regulator 114. The flow regulator 114 may have control valves that normally respond to signals generated and transmitted by the controlling unit 108 for controlling the flow rate of the inhaled drug. In an example, the flow regulator 114 may be a Critical Flow Controller Model TPK. In an embodiment, the performance of the flow regulator 114 may be affected by the resistance to flow posed by the inhalation device 104, a flow rate of the drug, a duration of inspiration, and stability of the flow rate of the drug.

In an embodiment, the apparatus 100 may also include a cascade impactor 116 in communication with the lung cast model 112 and the controlling unit 108.The cascade impactors 116 may be adapted to evaluate parameters associated with the deposition of the drug on the lung cast model 112. The parameters associated with the deposition include at least one of actual consumption of the drug at a particular lung area upon the deposition and a particle size distribution of the respiration flow and the drug. In an embodiment, the cascade impactor 116 may be measurement-related devices.

In an embodiment, the cascade impactor 116 may classify particles present in the mixture of the drug and the respiration flow by drawing the mixture through a cascade of progressively finer nozzles. The jest from these nozzles impact on plane sampling surfaces and at each stage of the nozzles, may collect finer particles than its predecessor stage. The collected samples may then be analyzed for obtaining the amount of drug deposited on each stage.

In a further embodiment, the deposition of the inhaled drug on the lung cast model 112 may be evaluated by a High-Performance Liquid Chromatography (HPLC) technique. The HPLC technique is used to separate, identify, and quantify each component in a mixture. The cascade impactor 116 may include pumps adapted to pass the pressurized mixture through a column filled with a solid adsorbent material. Each component in the mixture may interact slightly differently with the adsorbent material, thereby leading to different flow rates for the different components and separation of the components while flowing out of the column. In another embodiment, the HPLC instrument may include, but is not limited to, a degasser, a sampler, pumps, and a detector. The sampler may bring the mixture into a mobile phase stream which may carry it to the column. The pumps may deliver the desired flow and composition of the mobile phase through the column. The detector may generate a signal proportional to the amount of mixture emerging from the column, thereby allowing for quantitative analysis of the mixture components.

In a further embodiment, a plume visualization device may be included to characterize plume intensity and particle behavior of the inhaled drug by using a Particle Image Velocimetry (PIV)or a Phase Doppler Interferometry (PDI) technique. In the PIV technique, light scattering particles are added and a laser beam is formed into a light sheet illuminating the light scattering particles. In the PDI technique, measurement of velocity in dynamic experiments with a high temporal resolution is allowed. As would be understood, the HPLC technique, the PVI technique, and the PDI technique may allow assessment of the deposition of the inhaled drug on the lung cast model 112.

In an embodiment, the cascade impactor 116 may include, but is not limited to, a Next Generation Impactor (NGI). The NGI may be adapted to analyze cell permeation of the inhaled drug on the lungs by using at least one of calu-3 cell and A549 cell culture. In an embodiment, Computational Fluid Dynamic (CFD) models may be integrated with the apparatus 100 for an improved assessment of the deposition of the inhaled drug on the lung cast model 112.

Further, the apparatus 100 may include a vacuum pump 118 disposed between the cascade impactor 116 and the lung cast model 112. The vacuum pump 118 may be adapted to draw the respiration flow and the drug through the cascade impactor 116 for evaluation. The vacuum pump 118 may enhance the performance of the cascade impactor 116 by rapidly drawing the mixture through it, thereby increasing the efficiency and speed of the evaluation of the parameter associated with the deposition of the drug on the lung cast model 112.

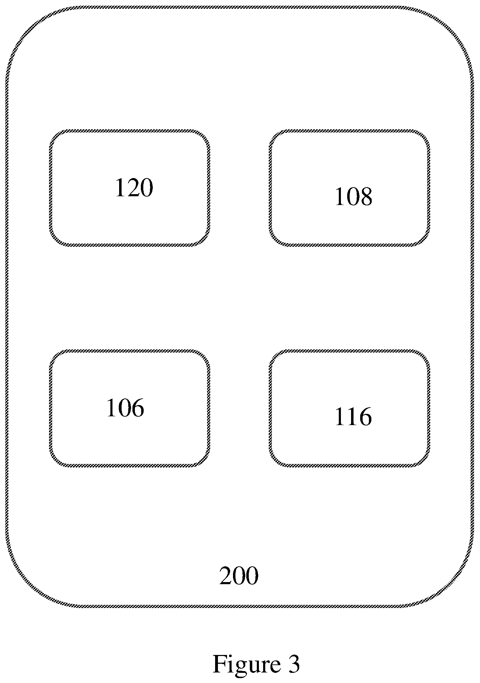

In an embodiment, the sensing unit 120, the breath simulator 106, the controlling unit 108, and the cascade impactor 116 form a system of the apparatus 100. **Figure 3** illustrates a block diagram of the system 200, in accordance with another embodiment of the present disclosure. The system 200 may be implemented in the apparatus 100 for simulating the deposition of the drug on the lungs of the individual. The constructional and operational details of the components of the system 200 are already explained in the description of Figure 1 and Figure 2.

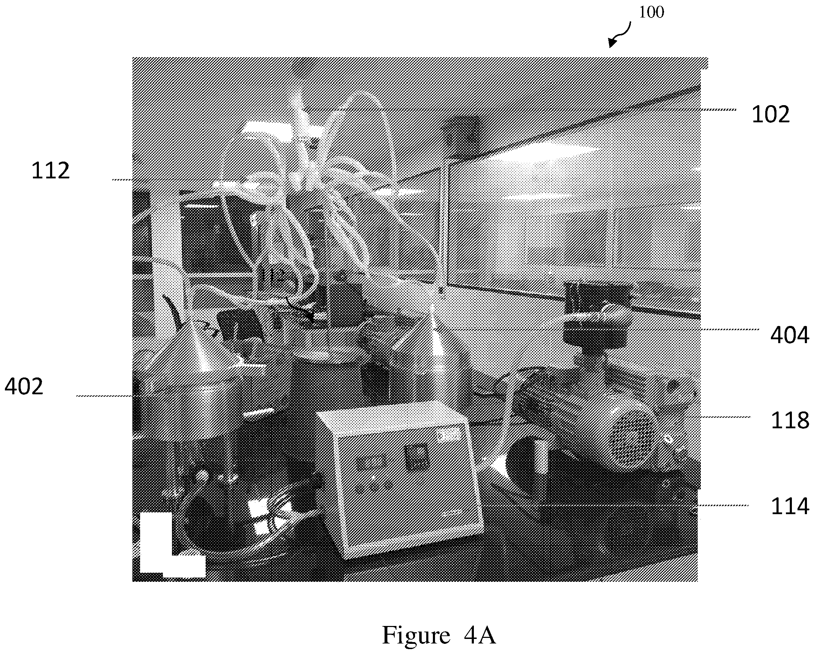

Figure 4A illustrates the apparatus 100, according to an embodiment of the present disclosure. Referring to Figure 4A, the apparatus 100 may include, but is not limited to the lung cast model 112 connected to a left lobe mimic 402 and a right lobe mimic 404. In an embodiment, the lobe mimics 402, 404 may be metallic dome units containing a filter, wherein the capacity of the filter may be 0.1 micron. Further, the lobe mimics may also include an expandable balloon that may be made of one or more biocompatible materials. In an embodiment, the expandable balloons may be adapted to expand during the suction from the pump to known and predefined volumes. Said volumes mimic the actual patient inhalation pattern and the contribution of the left and right lung lobes in that patient respectively.

In an example, if a patient A has inhalation flow rate of peak 60 Liters Per Minute (LPM) and volume of inspiration of 2 L, the contribution of the left and right lobe may not be identical. In a particular instance, the contribution of the left lobe may be 40*%* while the contribution of the right lobe may be 60 *%* owing to the physiology of the lung cast model. In this case, the left lobe mimic balloon expands by 800 ml while right lobe mimic expands by 1200 ml to form a complete inhalation. Further, the rate of expansion varies according to the physiology of the lung cast model. Therefore, in the same example, if the patient A has 45*%* contribution to the flow rate from left lobe, the rate of expansion of the balloon in the left lobe mimic may be 21 LPM while that of balloon in the right lobe mimic 404 may be 39 LPM.

In an embodiment, post performing the above experiment, the two metallic dome units indicating the left lobe mimic 402 and the right lobe mimic 404, are dismantled using a handle that may be provided on top of the left lobe mimic 402 and the right lobe mimic 404. In an embodiment, the balloon and filter unit (of Figure 4A) may be analyzed by chromatography in order to determine the amount of drug deposited on either lobe 402, 404.

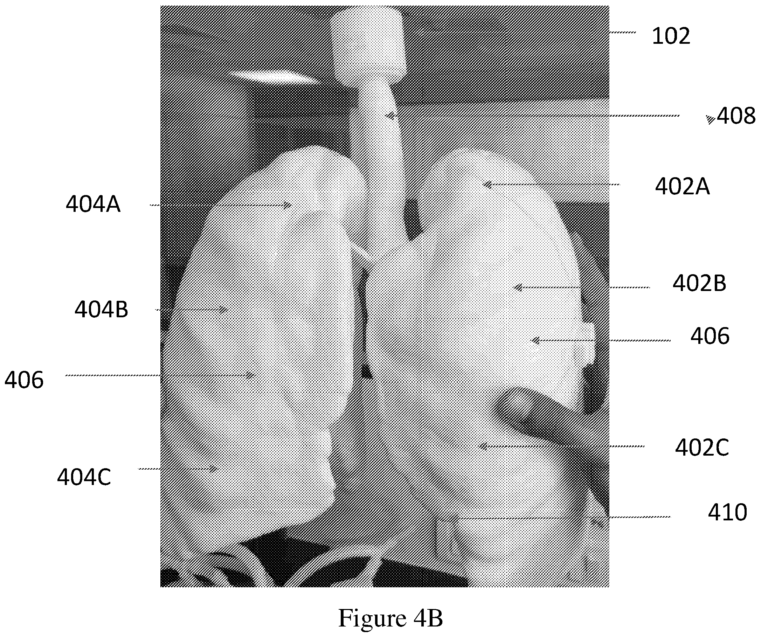

Figure 4B illustrates a prototype lung cast model 112, according to an embodiment of the present disclosure. The prototype is a lung cast model of a subject with all anatomical features including, but not limited to, lobar distributions, conducting airways, trachea 408, and heart shadow 410 as can be derived from a radiological imaging of the subject. In an embodiment, the lobar distributions may further include a left lung upper lobe 402A, a left lung middle lobe 402B, a left lung lower lobe 402C, a right lung upper lobe 404A, a right lung middle lobe 404B, a right lung lower lobe 404C, and lobar fissures 406. In an embodiment, the patient specific anatomical and physiological differences may be captured accurately in the experiment, thereby analyzing the distribution of the inhaled drug between the mouth-throat model 102, lung cast model 112, along with the lobar distribution of the inhaled drug.

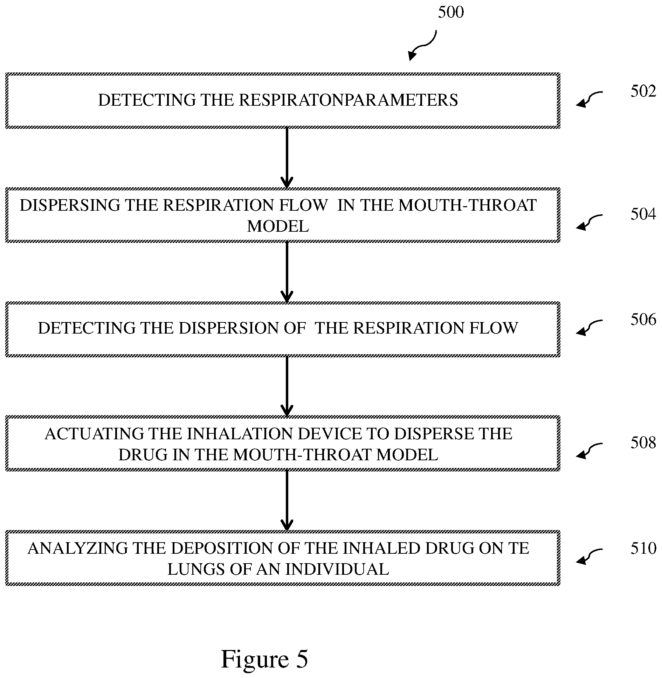

**Figure 5** illustrates a flow diagram depicting a method 500 for simulating deposition of the inhaled drug on the lungs, in accordance with an embodiment of the present disclosure. In an embodiment, the method 500 may be a computer-implemented method 500. In an embodiment, the method 500 may be executed by the system 200. Further, for the sake of brevity, features of the present disclosure that are explained in details in the description of Figure 1, Figure 2, Figure 3, Figure 4A, and Figure 4B are not explained in detail in the description of Figure 5.

At a step 502, the method 500 includes detecting the respiration parameter of the individual. The respiration parameter is detected when the individual inhales through the inhalation device 104. In an embodiment, the sensing unit of the apparatus 100 may detect the respiration parameter.

Further, at a step 504, the method 500 includes dispersing the respiration flow in the mouth-throat model 102.The respiration flow may be generated based on the respiration parameter of the individual. In an embodiment, the breath simulator 106 of the apparatus 100 disperses the respiration flow in the mouth-throat model 102.

In an embodiment, the method 500 may include receiving details relating to the at least one respiration parameter of the individual, and generating the respiration profile of the individual based on the at least one respiration parameter. Subsequently, the respiration profile may be transmitted to the breath simulator 106 for generation of the respiration flow.

At a step 506, the method 500 includes detecting the dispersion of the respiration flow by the breath simulator 106. In an embodiment, the controlling unit 108 of the apparatus 100 may detect the dispersion of the respiration flow.

At a step 508, the method 500 includes actuating the inhalation device 104 to disperse the drug in the mouth-throat mode 102. In an embodiment, the controlling unit 108 may actuate the inhalation device 104.

In an embodiment, the method 500 may include evaluating the parameters associated with the deposition of the drug on the lung cast model 112 and thereby analyzing the deposition of the inhaled drug on the lung cast model. In an embodiment, the cascade impactor 116 may evaluate the parameters.

As can be gathered, the present disclosure provides a comprehensive approach for simulating deposition of an inhaled drug on lungs of an individual. Firstly, the apparatus 100 has the capability of maneuvering the operating conditions of inhalation based on different individuals. Considering the simulation of the respiration flow, the apparatus 100 has the flexibility of changing the operating parameters of the testing process to comprehensively analyze the outcome of the drug inhalation on different individuals. Also, the apparatus 100 is a compact apparatus allowing convenient handling, maintenance, and operation. The lung cast model 112 of the present disclosure is formed so as to facilitate replication of real-life conditions for ensuring accuracy of the overall analysis. Additionally, the flow regulator 114 may optimize the performance of the apparatus 100, relying on the flow of the drug dispersion.

Therefore, the apparatus 100, the system 200, and the method 500 facilitate effective and controlled deposition of the drug on the lungs of an individual, thereby enhancing the efficiency of the action of the drug being administered. The present disclosure provides an individual-specific system for the deposition of an inhaled drug on the lungs of the individual. It takes into account the physiological parameters and respiration profiles of individuals. It is also capable of differentiating between effect of the inhaled drug in a healthy individual and in a diseased individual. In an example, an individual who is 80 years old or the one suffering from chronic breathing problem may administer drug based on their respiration profile which may be different from others. This will ensure better deposition of the drug on the lungs of the individual and thereby enhancing the therapeutic results of the drug. Therefore, the apparatus 100, the system 200, and the method 500 of the present disclosure are comprehensive, flexible, accurate, compact, and ensures individual-specific analysis for the drug inhalation.

The figures and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein. Moreover, the actions of any flow diagram need not be implemented in the order shown; nor do all of the acts necessarily need to be performed. Also, those acts that are not dependent on other acts may be performed in parallel with the other acts. The scope of the embodiments is by no means limited by these specific examples. Numerous variations, whether explicitly given in the specification or not, such as differences in structure, dimension, and use of material, are possible. The scope of the embodiments is at least as broad as given by the following claims.

## Claims

1. An apparatus (100) for simulating deposition of an inhaled drug on lungs of an individual, the apparatus (100) comprising:
a mouth-throat model (102);
an inhalation device (104) connected to the mouth-throat model (102) and adapted to disperse a drug in the mouth-throat model (102);
a breath simulator (106) connected to the mouth-throat model (102) and adapted to disperse a respiration flow in the mouth-throat model (102), wherein the respiration flow is generated based on a respiration profile of the individual;
a controlling unit (108) in communication with the breath simulator (106) and the inhalation device (104), comprising one or more sensors, wherein the controlling unit (108) is adapted to:
detect the dispersion of the respiration flow into the mouth-throat model (102), wherein the controlling unit is adapted to detect the dispersion when the breath simulator (106) receives a predetermined respiration flow;
transmit a signal to the inhalation device (104), in response to the detection; and actuate the inhalation device (104) to simultaneously disperse the drug in the mouth-throat model (102), in response to the transmission of the signal;
a mixing unit (110) formed downstream to the mouth-throat model (102) and the breath simulator (106), such that the respiration flow and the drug are uniformly mixed while passing through the mixing unit (110); and
a lung cast model (112) formed downstream to the mixing unit (110) and adapted to receive the mixture to accommodate deposition of the drug.

2. The apparatus (100) as claimed in claim 1, comprising:
a sensing unit (120) in communication with the inhalation device (104) and adapted to detect at least one respiration parameter of the individual, wherein the at least one respiration parameter is detected when the individual inhales through the inhalation device (104); and
the controlling unit (108) in communication with the sensing unit (120) and adapted to:
generate the respiration profile of the individual, based on the at least one respiration parameter; and
transmit the respiration profile to the breath simulator (106) for generation of the respiration flow.

3. The apparatus (100) as claimed in claim 2, wherein the at least one respiration parameter comprising a respiration flow rate, a total lung capacity, an effect of temperature, a humidity gradient, and mucosal layer in lung on respiration.

4. The apparatus (100) as claimed in claim 1, wherein the lung cast model (112) is formed based on at least one physiological parameter and the respiration profile of the individual.

5. The apparatus (100) as claimed in claim 1, comprising a flow regulator (114) in communication with the inhalation device (104) and the controlling unit (108), and adapted to regulate a flow rate of the inhaled drug dispersed in the mouth-throat model (102).

6. The apparatus (100) as claimed in claim 1, comprising a cascade impactor (116) in communication with the lung cast model (112) and the controlling unit (108), and adapted to evaluate parameters associated with the deposition of the drug on the lung cast model (112).

7. The apparatus (100) as claimed in claim 6, wherein the parameters associated with the deposition comprising at least one of actual consumption of the drug at a particular lung area upon the deposition and a particle size distribution of the respiration flow and the drug.

8. The apparatus (100) as claimed in claim 6, comprising a vacuum pump (118) adapted to draw the respiration flow and the drug through the cascade impactor (116).

9. A system (200) for simulating deposition of an inhaled drug on lungs of an individual, the system (200) comprising:
a sensing unit (120) in communication with an inhalation device (104) and adapted to detect at least one respiration parameter of the individual, wherein the at least one respiration parameter is detected when the individual inhales through the inhalation device (104); and
the breath simulator (106) in communication with the sensing unit (120) and the controlling unit (108) as claimed in claim 1.

10. The system (200) as claimed in claim 9, comprising a cascade impactor (116) in communication with the lung cast model (112) and the controlling unit (108), and adapted to evaluate parameters associated with the deposition of the drug on the lung cast model (112).

11. The system (200) as claimed in claim 9, comprising the controlling unit (108) in communication with the sensing unit 120 and adapted to:
receive details relating to the at least one respiration parameter;
generate a respiration profile of the individual, based on the at least one respiration parameter; and
transmit the respiration profile to the breath simulator (106) for generation of the respiration flow.

12. The system (200) as claimed in claim 8, wherein the at least one respiration parameter comprising a respiration flow rate, a total lung capacity, an effect of temperature, a humidity gradient, and mucosal layer in lung on respiration.

13. The system (200) as claimed in claim 10, wherein the parameters associated with the deposition comprising at least one of actual consumption of the drug at a particular lung area upon the deposition and a particle size distribution of the respiration flow and the drug.

14. A method (500) for simulating deposition of an inhaled drug on lungs of an individual, the method (500) comprising:
detecting, by a sensing unit (120), at least one respiration parameter of the individual, wherein the at least one respiration parameter is detected when the individual inhales through an inhalation device (104);
dispersing, by a breath simulator (106), a respiration flow in a mouth-throat model (102), wherein the respiration flow is generated based on the at least one respiration parameter of the individual;
detecting, by a controlling unit (108), the dispersion of the respiration flow by the breath simulator (106), wherein the controlling unit (108) detects the dispersion when the breath simulator (106) receives a predetermined respiration flow;
transmitting, by the controlling unit (108), a signal to the inhalation device (104), in response to the detection;
actuating, by the controlling unit (108), the inhalation device (104) to simultaneously disperse the drug in the mouth-throat mode (102), in response to the transmission of the signal; and
analyzing, by a lung cast model (112), deposition of the inhaled drug on the lungs of an individual.

15. The method (500) as claimed in claim 14, comprising:
evaluating, by a cascade impactor (116), parameters associated with the deposition of the drug on the lung cast model (112);
receiving, by the controlling unit (108), details relating to the at least one respiration parameter;
generating, by the controlling unit (108), a respiration profile of the individual, based on the at least one respiration parameter;
transmitting, by the controlling unit (108), the respiration profile to the breath simulator (106) for generation of the respiration flow; and
analyzing, by the lung cast model (112), distribution of the inhaled drug between the lungs of an individual.

## Patentansprüche

1. Vorrichtung (100) zum Simulieren der Ablagerung eines inhalierten Arzneimittels auf Lungen einer Person, die Vorrichtung (100) umfassend:
ein Mund-Rachen-Modell (102);
eine Inhalationsvorrichtung (104), die mit dem Mund-Rachen-Modell (102) verbunden und geeignet ist, ein Arzneimittel in dem Mund-Rachen-Modell (102) zu dispergieren;
einen Atemsimulator (106), der mit dem Mund-Rachen-Modell (102) verbunden und geeignet ist, einen Atmungsfluss in dem Mund-Rachen-Modell (102) zu dispergieren, wobei der Atmungsfluss basierend auf einem Atmungsprofil der Person erzeugt wird;
eine Steuereinheit (108), die mit dem Atemsimulator (106) und der Inhalationsvorrichtung (104) in Verbindung steht und einen oder mehrere Sensoren umfasst, wobei die Steuereinheit (108) geeignet ist zum:
Erfassen der Dispersion des Atmungsflusses in das Mund-Rachen-Modell (102), wobei die Steuereinheit zum Erfassen der Dispersion geeignet ist, wenn der Atemsimulator (106) einen vorbestimmten Atmungsfluss empfängt;
Senden eines Signals an die Inhalationsvorrichtung (104) in Reaktion auf das Erfassen; und Betätigen der Inhalationsvorrichtung (104) zum gleichzeitigen Dispergieren des Arzneimittels in dem Mund-Rachen-Modell (102) in Reaktion auf die Übertragung des Signals;
eine Mischeinheit (110), die dem Mund-Rachen-Modell (102) und dem Atemsimulator (106) nachgelagert gebildet ist, sodass der Atmungsfluss und das Arzneimittel bei dem Durchströmen der Mischeinheit (110) gleichmäßig vermischt werden; und
ein Lungenabdruckmodell (112), das der Mischeinheit (110) nachgelagert gebildet und zum Aufnehmen der Mischung geeignet ist, um die Ablagerung des Arzneimittels zu ermöglichen.

2. Vorrichtung (100) nach Anspruch 1, umfassend:
eine Erfassungseinheit (120) in Verbindung mit der Inhalationsvorrichtung (104) und geeignet zum Erfassen zumindest eines Atmungsparameters der Person, wobei der zumindest eine Atmungsparameter erfasst wird, wenn die Person durch die Inhalationsvorrichtung (104) inhaliert; und
die Steuereinheit (108) in Verbindung mit der Sensoreinheit (120) und geeignet zum:
Erzeugen des Atmungsprofils der Person, basierend auf dem zumindest einen Atmungsparameter; und
Übertragen des Atmungsprofils an den Atemsimulator (106) zum Erzeugen des Atmungsflusses.

3. Vorrichtung (100) nach Anspruch 2, wobei der zumindest eine Atmungsparameter eine Atmungsflussrate, eine Gesamtlungenkapazität, eine Auswirkung der Temperatur, einen Feuchtigkeitsgradienten und die Schleimhautschicht in der Lunge beim Atmen umfasst.

4. Vorrichtung (100) nach Anspruch 1, wobei das Lungenabdruckmodell (112) basierend auf zumindest einem physiologischen Parameter und dem Atmungsprofil der Person gebildet ist.

5. Vorrichtung (100) nach Anspruch 1, umfassend einen Durchflussregler (114) in Verbindung mit der Inhalationsvorrichtung (104) und der Steuereinheit (108) und geeignet zum Regulieren einer Durchflussrate des inhalierten Arzneimittels, das in dem Mund-Rachen-Modell (102) dispergiert ist.

6. Vorrichtung (100) nach Anspruch 1, umfassend einen Kaskadenimpaktor (116) in Verbindung mit dem Lungenabdruckmodell (112) und der Steuereinheit (108) und geeignet zum Auswerten von Parametern, die mit der Ablagerung des Arzneimittels auf dem Lungenabdruckmodell (112) assoziiert sind.

7. Vorrichtung (100) nach Anspruch 6, wobei die mit der Ablagerung verbundenen Parameter zumindest eines des tatsächlichen Verbrauchs des Arzneimittels in einem bestimmten Lungenbereich bei der Ablagerung und eine Partikelgrößenverteilung des Atmungsflusses und des Arzneimittels umfassen.

8. Vorrichtung (100) nach Anspruch 6, umfassend eine Vakuumpumpe (118), die zum Ansaugen des Atmungsflusses und des Arzneimittels durch den Kaskadenimpaktor (116) geeignet ist.

9. System (200) zum Simulieren der Ablagerung eines inhalierten Arzneimittels auf der Lunge einer Person, das System (200) umfassend:
eine Erfassungseinheit (120) in Verbindung mit einer Inhalationsvorrichtung (104) und geeignet zum Erfassen zumindest eines Atmungsparameters der Person, wobei der zumindest eine Atmungsparameter erfasst wird, wenn die Person durch die Inhalationsvorrichtung (104) inhaliert; und
den Atemsimulator (106) in Verbindung mit der Sensoreinheit (120) und der Steuereinheit (108) nach Anspruch 1.

10. System (200) nach Anspruch 9, umfassend einen Kaskadenimpaktor (116) in Verbindung mit dem Lungenabdruckmodell (112) und der Steuereinheit (108) und geeignet zum Auswerten von Parametern, die mit der Ablagerung des Arzneimittels auf dem Lungenabdruckmodell (112) assoziiert sind.

11. System (200) nach Anspruch 9, umfassend die Steuereinheit (108) in Verbindung mit der Sensoreinheit 120 und geeignet zum:
Empfangen von Einzelheiten zu dem zumindest einen Atmungsparameter;
Erzeugen eines Atmungsprofils der Person, basierend auf dem zumindest einen Atmungsparameter; und
Übertragen des Atmungsprofils an den Atemsimulator (106) zum Erzeugen des Atmungsflusses.

12. System (200) nach Anspruch 8, wobei der zumindest eine Atmungsparameter eine Atmungsflussrate, eine Gesamtlungenkapazität, eine Auswirkung der Temperatur, einen Feuchtigkeitsgradienten und die Schleimhautschicht in der Lunge beim Atmen umfasst.

13. System (200) nach Anspruch 10, wobei die mit der Ablagerung verbundenen Parameter zumindest eines des tatsächlichen Verbrauchs des Arzneimittels in einem bestimmten Lungenbereich bei der Ablagerung und eine Partikelgrößenverteilung des Atmungsflusses und des Arzneimittels umfassen.

14. Verfahren (500) zum Simulieren der Ablagerung eines inhalierten Arzneimittels auf der Lunge einer Person, das Verfahren (500) umfassend:
Erfassen, durch eine Sensoreinheit (120), zumindest eines Atmungsparameters der Person, wobei der zumindest eine Atmungsparameter erfasst wird, wenn die Person durch eine Inhalationsvorrichtung (104) inhaliert;
Dispergieren, durch einen Atemsimulator (106), eines Atmungsflusses in einem Mund-Rachen-Modell (102), wobei der Atmungsfluss basierend auf dem zumindest einen Atmungsparameter der Person erzeugt wird;
Erfassen, durch eine Steuereinheit (108), der Dispersion des Atmungsflusses durch den Atemsimulator (106), wobei die Steuereinheit (108) die Dispersion erfasst, wenn der Atemsimulator (106) einen vorbestimmten Atmungsfluss empfängt;
Übertragen, durch die Steuereinheit (108), eines Signals an die Inhalationsvorrichtung (104), in Reaktion auf das Erfassen;
Betätigen, durch die Steuereinheit (108), der Inhalationsvorrichtung (104) zum gleichzeitigen Dispergieren des Arzneimittels in dem Mund-Rachen-Modell (102) in Reaktion auf das Übertragen des Signals; und
Analysieren, durch ein Lungenabdruckmodell (112), der Ablagerung des inhalierten Arzneimittels in der Lunge einer Person.

15. Verfahren (500) nach Anspruch 14, umfassend:
Bewerten, durch einen Kaskadenimpaktor (116), von mit der Ablagerung des Arzneimittels auf dem Lungenabdruckmodell (112) assoziierten Parametern;
Empfangen, durch die Steuereinheit (108), von Einzelheiten bezüglich des zumindest einen Atmungsparameters;
Erzeugen, durch die Steuereinheit (108), eines Atmungsprofils der Person, basierend auf dem zumindest einen Atmungsparameter;
Übertragen, durch die Steuereinheit (108), des Atmungsprofils an den Atemsimulator (106) zum Erzeugen des Atmungsflusses; und
Analysieren, durch das Lungenabdruckmodell (112), der Verteilung des inhalierten Arzneimittels zwischen den Lungen einer Person.

## Revendications

1. Appareil (100) pour simuler le dépôt d'un médicament inhalé sur les poumons d'un individu, l'appareil (100) comprenant :
une maquette bouche-gorge (102) ;
un dispositif d'inhalation (104) relié à la maquette bouche-gorge (102) et adapté pour disperser un médicament dans la maquette bouche-gorge (102) ;
un simulateur de respiration (106) relié à la maquette bouche-gorge (102) et adapté pour disperser un flux respiratoire dans la maquette bouche-gorge (102), dans lequel le flux respiratoire est généré sur la base d'un profil respiratoire de l'individu ;
une unité de commande (108) en communication avec le simulateur de respiration (106) et le dispositif d'inhalation (104), comprenant un ou plusieurs capteurs, dans lequel l'unité de commande (108) est adaptée pour :
détecter la dispersion du flux respiratoire dans la maquette bouche-gorge (102), dans lequel l'unité de commande est adaptée pour détecter la dispersion lorsque le simulateur de respiration (106) reçoit un flux respiratoire prédéterminé ;
transmettre un signal au dispositif d'inhalation (104), en réponse à la détection ; et actionner le dispositif d'inhalation (104) pour disperser simultanément le médicament dans la maquette bouche-gorge (102), en réponse à la transmission du signal ;
une unité de mélange (110) formée en aval de la maquette bouche-gorge (102) et du simulateur de respiration (106), de telle sorte que le flux respiratoire et le médicament sont mélangés uniformément tout en passant à travers l'unité de mélange (110) ; et
une maquette en plâtre de poumons (112) formée en aval de l'unité de mélange (110) et adapté pour recevoir le mélange afin de recueillir le dépôt du médicament.

2. Appareil (100) selon la revendication 1, comprenant :
une unité de mesure (120) en communication avec le dispositif d'inhalation (104) et adaptée pour détecter l'au moins un paramètre de respiration de l'individu, dans lequel l'au moins un paramètre de respiration est détecté lorsque l'individu inhale à travers le dispositif d'inhalation (104) ; et
l'unité de commande (108) en communication avec l'unité de mesure (120) et adaptée pour :
générer le profil respiratoire de l'individu, sur la base de l'au moins un paramètre de respiration ; et
transmettre le profil respiratoire au simulateur de respiration (106) pour la génération du flux respiratoire.

3. Appareil (100) selon la revendication 2, dans lequel l'au moins un paramètre de respiration comprend un débit respiratoire, une capacité pulmonaire totale, un effet de température, un gradient d'humidité et une couche muqueuse dans les poumons sur la respiration.

4. Appareil (100) selon la revendication 1, dans lequel la maquette en plâtre de poumons (112) est formée sur la base de l'au moins un paramètre physiologique et du profil respiratoire de l'individu.

5. Appareil (100) selon la revendication 1, comprenant un régulateur de flux (114) en communication avec le dispositif d'inhalation (104) et l'unité de commande (108), et adapté pour réguler un débit du médicament inhalé dispersé dans la maquette bouche-gorge (102).

6. Appareil (100) selon la revendication 1, comprenant un impacteur en cascade (116) en communication avec la maquette en plâtre de poumons (112) et l'unité de commande (108), et adapté pour évaluer des paramètres associés au dépôt du médicament sur la maquette en plâtre de poumons (112).

7. Appareil (100) selon la revendication 6, dans lequel les paramètres associés au dépôt comprennent au moins l'une parmi une consommation réelle du médicament au niveau d'une zone pulmonaire particulière lors du dépôt et une distribution granulométrique du flux respiratoire et du médicament.

8. Appareil (100) selon la revendication 6, comprenant une pompe à vide (118) adaptée pour aspirer le flux respiratoire et le médicament à travers l'impacteur en cascade (116).

9. Système (200) pour simuler le dépôt d'un médicament inhalé sur les poumons d'un individu, le système (200) comprenant :
une unité de mesure (120) en communication avec un dispositif d'inhalation (104) et adaptée pour détecter au moins un paramètre de respiration de l'individu, dans lequel l'au moins un paramètre de respiration est détecté lorsque l'individu inhale à travers le dispositif d'inhalation (104) ; et
le simulateur de respiration (106) en communication avec l'unité de mesure (120) et l'unité de commande (108) selon la revendication 1.

10. Système (200) selon la revendication 9, comprenant un impacteur en cascade (116) en communication avec la maquette en plâtre de poumons (112) et l'unité de commande (108), et adapté pour évaluer des paramètres associés au dépôt du médicament sur la maquette en plâtre de poumons (112).

11. Système (200) selon la revendication 9, comprenant l'unité de commande (108) en communication avec l'unité de mesure 120 et adaptée pour :
recevoir des détails concernant l'au moins un paramètre de respiration ;
générer un profil respiratoire de l'individu, sur la base de l'au moins un paramètre de respiration ; et
transmettre le profil respiratoire au simulateur de respiration (106) pour la génération du flux respiratoire.

12. Système (200) selon la revendication 8, dans lequel l'au moins un paramètre de respiration comprend un débit respiratoire, une capacité pulmonaire totale, un effet de température, un gradient d'humidité et une couche muqueuse dans les poumons sur la respiration.

13. Système (200) selon la revendication 10, dans lequel les paramètres associés au dépôt comprennent au moins l'une parmi une consommation réelle du médicament au niveau d'une zone pulmonaire particulière lors du dépôt et une distribution granulométrique du flux respiratoire et du médicament.

14. Procédé (500) pour simuler le dépôt d'un médicament inhalé sur les poumons d'un individu, le procédé (500) comprenant :
la détection, par une unité de mesure (120), d'au moins un paramètre de respiration de l'individu, dans lequel l'au moins un paramètre de respiration est détecté lorsque l'individu inhale à travers un dispositif d'inhalation (104) ;
la dispersion, par un simulateur de respiration (106), d'un flux respiratoire dans une maquette bouche-gorge (102), dans lequel le flux respiratoire est généré sur la base de l'au moins un paramètre de respiration de l'individu ;
la détection, par une unité de commande (108), de la dispersion du flux respiratoire par le simulateur de respiration (106), dans lequel l'unité de commande (108) détecte la dispersion lorsque le simulateur de respiration (106) reçoit un flux respiratoire prédéterminé ;
la transmission, par l'unité de commande (108), d'un signal au dispositif d'inhalation (104), en réponse à la détection ;
l'actionnement, par l'unité de commande (108), du dispositif d'inhalation (104) pour disperser simultanément le médicament dans la maquette bouche-gorge (102), en réponse à la transmission du signal ; et
l'analyse, par une maquette en plâtre de poumons (112), du dépôt du médicament inhalé sur les poumons d'un individu.

15. Procédé (500) selon la revendication 14, comprenant :
l'évaluation, par un impacteur en cascade (116), de paramètres associés au dépôt du médicament sur la maquette en plâtre de poumons (112) ;
la réception, par l'unité de commande (108), de détails concernant l'au moins un paramètre de respiration ;
la génération, par l'unité de commande (108), d'un profil respiratoire de l'individu, sur la base de l'au moins un paramètre de respiration ;
la transmission, par l'unité de commande (108), du profil respiratoire au simulateur de respiration (106) pour la génération du flux respiratoire ; et
l'analyse, par la maquette en plâtre de poumons (112), de la distribution du médicament inhalé entre les poumons d'un individu.
